(19) Europäisches Patentamt
European Patent Office
Office européen des brevets

(11) **EP 3 587 805 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **19181166.0**

(22) Anmeldetag: **19.06.2019**

(51) Internationale Patentklassifikation (IPC):
**F03D 7/02** *(2006.01)*

(52) Gemeinsame Patentklassifikation (CPC):
**F03D 7/028; F03D 7/048;** F05B 2270/204; F05B 2270/335; Y02E 10/72

(54) **SYSTEM ZUR ERMITTLUNG DER VERFÜGBAREN LEISTUNG EINES WINDPARKS**

SYSTEM FOR DETERMINING THE AVAILABLE PERFORMANCE OF A WIND FARM

SYSTÈME DE DÉTERMINATION DE LA PERFORMANCE DISPONIBLE D'UN PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2018 DE 102018004816**

(43) Veröffentlichungstag der Anmeldung:
**01.01.2020 Patentblatt 2020/01**

(73) Patentinhaber: **Siemens Gamesa Renewable Energy Service GmbH**
**20097 Hamburg (DE)**

(72) Erfinder: **Geisler, Jens**
**24768 Rendsburg (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
**EP-A1- 3 263 889 WO-A1-2018/162706**

• **XP055492230**

EP 3 587 805 B1

**Beschreibung**

Gegenstand der vorliegenden Erfindung ist ein Verfahren zur Ermittlung einer Differenzleistung zwischen einer unter gegebenen Randbedingungen tatsächlich in ein Versorgungsnetz eingespeisten Abgabeleistung eines Windparks und einer unter den Randbedingungen maximal möglichen Abgabeleistung des Windparks, wobei der Windpark eine Mehrzahl von in räumlicher Nähe zueinander angeordneten Windenergieanlagen zur Umwandlung von Windenergie in elektrische Energie aufweist.

Windenergieanlagen bzw. zu Windparks zusammengeschlossene Windenergieanlagen tragen in modernen Energieversorgungsnetzen einen immer größeren Anteil an der insgesamt in das Versorgungsnetz eingespeisten elektrischen Leistung. Im Zuge dieser Entwicklung steigen auch die Anforderungen an Windparks, zur Stabilität des Versorgungsnetzes beizutragen. Insbesondere fordern Netzbetreiber häufig von Windparks, Reserveleistung bereitstellen zu können, welche bei Bedarf abgerufen werden kann. Um dies leisten zu können, werden die Windenergieanlagen in einem Windpark häufig in einem sogenannten "gedrosselten" Zustand betrieben, in dem sie mit einer geringeren Abgabeleistung betrieben werden, als dies die Windverhältnisse zuließen. Dies kann insbesondere durch eine Verstellung des Blattwinkels in einen suboptimalen Bereich erfolgen, was dazu führt, dass dem Wind weniger Energie entzogen wird, als dies bei optimalem Blattwinkel der Fall wäre. Auf Anfrage des Netzbetreibers kann die Windenergieanlage dann in den optimalen oder zumindest in einen "besseren" Betriebszustand versetzt werden, in dem dann eine höhere Leistung produziert und ins Versorgungsnetz eingespeist wird.

Es ist von Vorteil, wenn die genaue Menge der verfügbaren Reserveleistung zu jedem Zeitpunkt möglichst genau eingeschätzt werden kann. Wenn ein Windpark einen genauen Schätzwert an den Netzbetreiber abgibt, kann dieser damit einerseits besser planen. Andererseits ist es häufig vorgesehen, dass Energieerzeuger für die Vorhaltung von Reserveleistung vergütet werden. Für die Berechnung dieser Vergütung ist es notwendig festzustellen, wie groß die Reserveleistung ist, welche bei Bedarf tatsächlich in das Netz eingespeist werden könnte.

Zur Ermittlung der maximalen Abgabeleistung, welche eine Windenergieanlage bei gegebenen Randbedingungen (insbesondere bei gegebenen Windverhältnissen) erzeugen könnte, wenn sie nicht gedrosselt betrieben würde, ist es bekannt, den auf die Windenergieanlage einströmenden Wind zu bestimmen und anhand des einströmenden Winds die maximale Abgabeleistung zu berechnen. Der einströmende Wind kann beispielsweise mit Hilfe von Windmessgeräten ermittelt oder anhand der Betriebsparameter der Windenergieanlage abgeschätzt werden. Diese Bestimmung der maximalen Abgabeleistung kann für jede Windenergieanlage eines Windparks durchgeführt werden. Die gesamte maximale Abgabeleistung des Windparks ergibt sich dann als Summe der maximalen Abgabeleistungen der Windenergieanlagen.

Ein Problem bei dieser Vorgehensweise ist es, dass das Ergebnis der Berechnung durch den sogenannten Nachlaufeffekt verfälscht wird. Dieser Effekt resultiert daraus, dass jede Windenergieanlage dem Wind eine gewisse Energiemenge entzieht, so dass die Windgeschwindigkeit im Nachlauf der Windenergieanlage reduziert ist. Nachdem der Wind eine Windenergieanlage passiert hat, bewegt er sich also mit reduzierter Geschwindigkeit zur nächsten Windenergieanlage im Windpark. Zwar wird ein Teil des Geschwindigkeitsverlustes durch von oben hinzuströmenden Wind ausgeglichen, dennoch kann sich der Nachlaufeffekt einer Windenergieanlage auf eine Mehrzahl von in Windrichtung nachgeordneten Windenergieanlagen auswirken.

Die Stärke der Windgeschwindigkeitsreduzierung hängt von der dem Wind entnommenen Leistung ab. Deshalb wird durch das oben beschriebene Verfahren die maximale Abgabeleistung des Windparks überschätzt, da sich die tatsächliche Windgeschwindigkeit für im Nachlauf befindliche Windenergieanlagen bei einer Aufhebung der Drosselung reduziert.

Um diesem Problem zu begegnen sind sogenannte Nachlaufmodelle bekannt, mit denen versucht wird, den oben genannten Fehler bei der Schätzung der maximalen Abgabeleistung zu korrigieren. Eine Übersicht über bekannte Nachlaufmodelle ist beispielsweise in Kapitel 4 des Dokuments "Gögmen, T., Giebel, G., Sørensen, P. E., & Poulsen, N. K. (2016) . Possible Power Estimation of Down-Regulated Offshore Wind Power Plants. Technical University of Denmark (DTU)" angegeben. Das Problem bei den bekannten Modellen ist es jedoch, dass sie insbesondere bei großen Windparks, bei denen sich der Nachlauf einer Vielzahl von Windenergieanlagen überlagern kann, häufig sehr ungenaue Ergebnisse liefern.

Aus dem Dokument WO 2018/162706 A1 ist ein Verfahren zum Bestimmen einer verfügbaren Leistung eines Windparks bekannt, bei dem ein Nachlaufmodell verwendet wird, um eine Abschattungsmatrix zu erstellen, die im gedrosselten Betrieb des Windparks für jede Windenergieanlage die Ermittlung einer maximal (also im ungedrosselten Betrieb) verfügbaren wirksamen Windgeschwindigkeit ermöglicht.

Vor diesem Hintergrund ist es die Aufgabe der vorliegenden Erfindung, ein Verfahren, ein System sowie einen Windpark bereitzustellen, mit dem eine verbesserte Abschätzung der Differenzleistung zwischen der momentan tatsächlich im gedrosselten Betrieb abgerufenen Abgabeleistung und einer maximal möglichen Abgabeleistung des Windparks vorgenommen werden kann. Gelöst wird diese Aufgabe mit den Merkmalen der unabhängigen Ansprüche. Vorteilhafte Ausführungsformen sind in den Unteransprüchen angegeben.

Das erfindungsgemäße Verfahren umfasst die nachfolgenden Schritte:

a. Betreiben des Windparks unter den gegebenen Randbedingungen, wobei zumindest eine Windenergieanlage in einem gedrosselten Zustand betrieben wird;

b. Ermitteln einer unter den Randbedingungen vorherrschenden Performancegröße einer ausgewählten Windenergieanlage;

c. Verwenden eines Nachlaufmodells zur Schätzung einer simulierten gedrosselten Performancegröße der ausgewählten Windenergieanlage, wobei im Nachlaufmodell die gegebenen Randbedingungen sowie der gedrosselte Zustand der zumindest einen Windenergieanlage berücksichtigt werden;

d. Verwenden des Nachlaufmodells zur Schätzung einer simulierten maximalen Performancegröße der ausgewählten Windenergieanlage, wobei im Nachlaufmodell die gegebenen Randbedingungen berücksichtigt werden und angenommen wird, dass der Windpark im ungedrosselten Zustand betrieben wird;

e. Ermitteln einer korrigierten maximalen Performancegröße für die ausgewählte Windenergieanlage unter Berücksichtigung der vorherrschenden Performancegröße, der simulierten gedrosselten Performancegröße und der simulierten maximalen Performancegröße;

f. Verwenden der korrigierten maximalen Performancegröße zur Berechnung der maximal möglichen Abgabeleistung der ausgewählten Windenergieanlage.

Zunächst werden einige im Rahmen der Erfindung verwendete Begriffe erläutert.

Die tatsächlich abgerufene Abgabeleistung eines Windparks stellt diejenige Leistung des Windparks dar, welche der Windpark unter den gegebenen Randbedingungen zum momentanen Zeitpunkt tatsächlich in ein Versorgungsnetz, an das der Windpark angeschlossen ist, einspeist. Bei den gegebenen Randbedingungen kann es sich insbesondere um die momentan vorherrschenden Windbedingungen handeln, beispielsweise um Windgeschwindigkeit, Windrichtung, Turbulenzintensität, Höhengradienten, Luftdichte und atmosphärische Schichtung. Weitere Randbedingungen können durch eine oder mehrere der nachfolgenden Größen gegeben sein: externe Leistungsvorgaben, interne Begrenzungen (z.B. zum Bauteilschutz), die Anzahl der momentan (z.B. zu Wartungszwecken) stillgelegten Anlagen, der Zustand der Rotorblätter (beeinflusst durch z.B. Dreck oder Eis), die Getriebetemperatur, und/oder die Netzspannung. Weiterhin stellen auch die Kennwerte der Windenergieanlagen, das Park-Layout, die Topographie bzw. das Terrain sowie ggf. vorhandene benachbarte Windparks Randbedingungen in diesem Sinne dar, welche die tatsächlich abgerufene Abgabeleistung beeinflussen können. Die gegebenen Randbedingungen können als feststehende Größen vorliegen oder auch beispielsweise durch Messung oder Schätzung ermittelt werden.

Ein "gedrosselter" Zustand einer Windenergieanlage bezeichnet einen Zustand, in dem die Windenergieanlage bei suboptimalen Betriebsparametern betrieben wird, wodurch die Windenergieanlage weniger Energie aus dem Wind bezieht, als dies bei optimalen Betriebsparametern möglich wäre. Die "Drosselung" kann insbesondere durch eine Blattwinkelverstellung erzielt werden. Wenn im Rahmen der Erfindung davon gesprochen wird, dass der Windpark im gedrosselten Zustand betrieben wird, ist dies gleichbedeutend damit, dass zumindest eine Windenergieanlage des Windparks gedrosselt betrieben wird. Der Windpark weist üblicherweise einen Übergabepunkt auf, an dem die von den Windenergieanlagen erzeugte elektrische Leistung in ein übergeordnetes Netz eingespeist wird.

Eine Performancegröße einer ausgewählten Windenergieanlage bezeichnet im Rahmen der Erfindung eine der ausgewählten Windenergieanlage zugeordnete Größe, welche ein Maß für die von der Windenergieanlage erzeugte Leistung darstellt. Bei der ausgewählten Windenergieanlage kann es sich um eine gedrosselte Windenergieanlage oder um eine nichtgedrosselte Windenergieanlage handeln, wobei der Drosselungszustand bei der Ermittlung der jeweiligen Performancegröße als gegeben angesehen wird.

Die vorherrschende Performancegröße bezeichnet in diesem Sinne ein Maß für die von der ausgewählten Windenergieanlage unter den Randbedingungen sowie dem tatsächlichen Drosselungszustand momentan erzeugte Leistung. Die simulierte gedrosselte Performancegröße ist eine Performancegröße der ausgewählten Windenergieanlage, welche durch eine Simulation unter den gegebenen Randbedingungen mit Hilfe eines Nachlaufmodells erhalten wird, wobei im Nachlaufmodell berücksichtigt wird, dass der Windpark gedrosselt betrieben wird (dass also zumindest eine Windenergieanlage im Windpark gedrosselt betrieben wird). Schließlich wird die simulierte maximale Performancegröße ebenfalls aus dem Nachlaufmodell unter den gegebenen Randbedingungen erhalten, wobei (im Unterschied zur simulierten gedrosselten Performancegröße) angenommen wird, dass der Windpark ungedrosselt betrieben wird, dass also alle Windenergieanlagen gemäß ihrem jeweiligen optimalen Betriebspunkt gefahren werden.

Unter einem Nachlaufmodell wird hier eine Rechenvorschrift verstanden, die zur Bestimmung des zeitlichen Verlaufs der Windverhältnisse im Bereich eines Windparks verwendet werden kann. Dazu wird typischerweise die Geschwindigkeit und Richtung des frei anströmenden Windes und der Nachlauf der Anlagen im Park berücksichtigt. Der Wind im Nachlauf einer Anlage ist dadurch gekennzeichnet, dass er gegenüber dem anströmenden Wind eine reduzierte Geschwindigkeit aufweist, da der Rotor der Anlage dem ihn durchströmenden Wind Leistung entnimmt und außerdem die Turbulenz zunimmt. Da die Berechnung des dreidimensionalen Verhaltens eines strömenden Fluids sehr kompliziert und rechenaufwändig ist, werden in Nachlaufmodellen häufig Vereinfachungen vorgenommen. Z.B. kann die Anzahl betrachteter Dimensionen auf zwei reduziert werden, wenn vertikale Strömungen und Strömungsunterschiede vernachlässigt werden. Weiterhin reicht es oft aus, die räumliche Verteilung der Strömungsverhältnisse über größere Bereiche grob gemittelt darzustellen. Zur Berücksichtigung der Leistung, die dem Wind von den einzelnen Anlagen entnommen wird, wird bei der Berechnung des Nachlaufs häufig der gemessene, geschätzte oder simulierte Schub oder der Induktionsfaktor der einzelnen Anlagen, insbesondere der Anlagen, die in Windrichtung stromaufwärts der betrachteten Anlage stehen, verwendet. Bei dem erfindungsgemäß verwendeten Nachlaufmodell kann es sich grundsätzlich um ein beliebiges bekanntes Nachlaufmodell handeln.

Durch die erfindungsgemäße Verwendung des Nachlaufmodells zur Abschätzung der beiden simulierten Performancegrößen kann eine korrigierte maximale Performancegröße ermittelt werden, welche eine verbesserte Grundlage zur Berechnung der maximal möglichen Abgabeleistung der ausgewählten Windenergieanlage darstellt.

Im Rahmen der Erfindung wurde erkannt, dass bekannte Nachlaufmodelle insbesondere bei großen Windparks keine genauen Ergebnisse zur Abschätzung der maximal möglichen Abgabeleistung des Windparks liefern. Weiterhin wurde erkannt, dass ein Nachlaufmodell nicht nur zur Simulation der maximalen Abgabeleistung verwendet werden kann, sondern auch zur Ermittlung der Performancegröße im gedrosselten Betrieb (also zur Ermittlung der simulierten gedrosselten Performancegröße). Die simulierte gedrosselte Performancegröße kann dann mit der tatsächlich vorherrschenden Performancegröße verglichen werden und daraus ein Maß für die Simulationsqualität des Nachlaufmodells unter den gegebenen Randbedingungen abgeleitet werden. Die Erkenntnis über die Simulationsqualität kann anschließend zur Korrektur der simulierten maximalen Performancegröße verwendet werden, um die korrigierte maximale Performancegröße zu erhalten und um aus dieser schließlich die maximal mögliche Abgabeleistung der ausgewählten Windenergieanlage zu berechnen. Im Unterschied dazu wird mit bekannten Nachlaufmodellen im Stand der Technik lediglich eine einzige simulierte Performancegröße, nämlich die zu ermittelnde maximale Performancegröße, bestimmt und zur Ermittlung der Differenzleistung verwendet. Im Stand der Technik wird also eine reine Vorwärtssimulation durchgeführt, wohingegen die vorliegende Erfindung eine Verbesserung durch einen zusätzlichen Vergleich mit der Realität vorsieht.

In einer bevorzugten Ausführungsform kann zur Ermittlung der korrigierten maximalen Performancegröße (im Rahmen der Erfindung auch $X_{i,max,est}$ genannt) der Quotient aus der tatsächlich vorherrschenden Performancegröße ($X_{i,lim,real}$) und der simulierten gedrosselten Performancegröße ($X_{i,lim,sim}$) gebildet werden, wobei dieser Quotient mit der simulierten maximalen Performancegröße ($X_{i,max,sim}$) multipliziert wird, um die korrigierte maximale Performancegröße ($X_{i,max,est}$) zu erhalten. Die korrigierte maximale Performancegröße der ausgewählten Windenergieanlage ergibt sich in diesem Fall gemäß der Formel: $X_{i,max,est} = X_{i,max,sim} \times \left( X_{i,lim,real} \Big/ X_{i,lim,sim} \right)$, wobei der jeweilige Index i anzeigt, dass der jeweilige Wert einer ausgewählten Windenergieanlage i zugeordnet ist.

Die tatsächlich vorherrschende Performancegröße, in die die momentan gegebenen Randbedingungen sowie die Drosselung des Windparks einfließen, wird also mit der simulierten gedrosselten Performancegröße ins Verhältnis gesetzt, in der die gegebenen Randbedingungen sowie die Drosselung des Windparks ebenfalls berücksichtigt sind. Im Falle einer perfekten Simulation würde die simulierte gedrosselte Performancegröße mit der tatsächlich vorherrschenden Performancegröße übereinstimmen und der Quotient damit 1 ergeben und die korrigierte maximale Performancegröße also mit der simulierten maximalen Performancegröße übereinstimmen. Da die simulierte maximale Performancegröße allerdings insbesondere bei großen Windparks häufig beträchtlich von der tatsächlichen maximalen Performancegröße abweicht, liefert der Quotient ein Maß für den bei den gegebenen Randbedingungen vorherrschenden Simulationsfehler. Die Multiplikation der simulierten maximalen Performancegröße mit diesem Quotienten führt somit zu einer deutlich verbesserten Schätzung der maximalen Performancegröße.

Vorzugsweise werden die Schritte b. bis f. für eine Mehrzahl von Windenergieanlagen und weiter bevorzugt für alle Windenergieanlagen des Windparks durchgeführt. In Schritt f. werden weiter vorzugsweise die Mehrzahl der bzw. alle maximalen Abgabeleistungen der Windenergieanlagen zur Ermittlung der maximal möglichen Abgabeleistung des Windparks addiert. Dabei können auch Verluste durch die Übertragung im Parknetz berücksichtigt werden. Insbesondere kann dann die Differenzleistung zwischen der tatsächlich in das Versorgungsnetz eingespeisten Abgabeleistung und der berechneten maximalen Abgabeleistung des Windparks ermittelt werden.

In einer bevorzugten Ausführungsform werden die Performancegrößen jeweils durch die die ausgewählte Windenergieanlage anströmende Windgeschwindigkeit gebildet. Dies bedeutet insbesondere, dass die vorherrschende Performancegröße durch die tatsächlich vorherrschende, die ausgewählte Windenergieanlage anströmende Windgeschwindigkeit gebildet wird. Diese Windgeschwindigkeit kann beispielsweise durch entsprechende Messgeräte (welche unmittelbar an der ausgewählten Windenergieanlage oder auch an einer separaten Messstation angeordnet sein können) gemessen oder aus den vorherrschenden Betriebsbedingungen (z.B. aus Drehzahl, Anstellwinkel, tatsächlich erzeugter Leistung, Luftdichte, Anlagen-interne Verluste, Eigenbedarf) abgeschätzt werden. Weiterhin können die beiden simulierten Performancegrößen durch aus der jeweiligen Simulation erhaltene Windgeschwindigkeiten gebildet werden (also aus der Simulation unter der Annahme des gedrosselten Betriebs bzw. unter der Annahme des ungedrosselten Betriebs des Windparks). Dabei berücksichtigt die in der Simulation gebildete Windgeschwindigkeit insbesondere die Geschwindigkeit des Windes, der den Park frei anströmt und das Geschwindigkeitsdefizit, das aus der Leistungsentnahme stromaufwärts stehender Anlagen resultiert.

In einer alternativen Ausführungsform kann die jeweilige Performancegröße auch unmittelbar durch die jeweilige von der ausgewählten Windenergieanlage abgegebene Leistung gebildet sein. Ebenso wie die Windgeschwindigkeiten kann auch die tatsächlich vorherrschende abgegebene Leistung aus den vorherrschenden Betriebsbedingungen ermittelt werden. Zudem kann anhand des Nachlaufmodells die gedrosselte sowie die maximale Leistung simuliert werden. Die gemäß dem Verfahrensschritt 1e. erhaltene korrigierte maximale Performancegröße der ausgewählten Windenergieanlage stimmt in dieser Ausführungsform unmittelbar mit der berechneten maximal möglichen Abgabeleistung der ausgewählten Windenergieanlage überein.

In einer weiteren alternativen Ausführungsform können die Performancegrößen durch Windgeschwindigkeitsdefizite gebildet sein. Ein Windgeschwindigkeitsdefizit bezeichnet die Differenz zwischen der Geschwindigkeit der den Windpark (bzw. dessen "Eingang") frei anströmenden Luft und der Geschwindigkeit der auf die ausgewählte Windenergieanlage auftreffenden Luft. Das Windgeschwindigkeitsdefizit ist insoweit ein Maß dafür, wie viel Geschwindigkeit der Wind vom Eingang (also von einer in Windrichtung vorne angeordneten Windenergieanlage des Parks) bis zu der ausgewählten Windenergieanlage verliert. Entsprechende simulierte Werte der Windgeschwindigkeitsdefizite können aus den Nachlaufmodellen gewonnen werden. Das tatsächlich vorherrschende Windgeschwindigkeitsdefizit einer ausgewählten Windenergieanlage kann beispielsweise mit Hilfe von entsprechenden Messvorrichtungen am "Eingang" des Windparks (also im Bereich einer in Windrichtung vorne liegenden Windenergieanlage) sowie unmittelbar vor der ausgewählten Windenergieanlage gemessen oder auch anhand der Betriebsparameter der ausgewählten Windenergieanlage abgeschätzt werden. Dabei muss beachtet werden, dass der auf den Eingang des Windparks zu einem Zeitpunkt $t_0$ auftreffende Wind bei unterstellter freier Propagation erst mit einer Verzögerung $\Delta t$ zum Zeitpunkt $t_1 = t_0 + \Delta t$ auf die ausgewählte Windenergieanlage auftreffen würde. Die Verzögerung ergibt sich aus der Geschwindigkeit der auf den Eingang des Windparks einströmenden Luft $U_{inf}$ und der Wegstrecke $L$ entlang der Windrichtung zwischen dem Eingangspunkt des Windparks (also dem Ort der in Windrichtung vorne angeordneten Windenergieanlage) und dem Ort der ausgewählten Windenergieanlage, also gemäß der Formel:

$$\Delta t = {}^{L}\!/_{U_{inf}(t_0)}$$

. Zum betrachteten Zeitpunkt $t_1$ ergibt sich somit für die im Abstand L vom Eingang des Windparks entfernte ausgewählte Windenergieanlage ein Windgeschwindigkeitsdefizit von

$$\Delta U_{lim,real}(t_1) = U_{lim,real}(t_1) - U_{inf}\left(t_1 - \frac{L}{U_{inf}(t_0)}\right)$$

.

Gegenstand der Erfindung ist weiterhin ein System zur Ermittlung einer Differenzleistung zwischen einer unter gegebenen Randbedingungen tatsächlich in ein Versorgungsnetz eingespeisten Abgabeleistung eines gedrosselt betriebenen Windparks und einer unter den gleichen Randbedingungen maximal möglichen Abgabeleistung des Windparks, umfassend:

a. einen Performancedetektor zur Ermittlung einer unter den Randbedingungen tatsächlich vorherrschenden Performancegröße einer ausgewählten Windenergieanlage;

b. ein Simulationsmodul ausgebildet zur Simulation eines Nachlaufmodells zur Berechnung einer

i. simulierten gedrosselten Performancegröße der ausgewählten Windenergieanlage, wobei die gegebenen Randbedingungen sowie der gedrosselte Zustand der zumindest einen Windenergieanlage berücksichtigt werden, sowie einer

ii. simulierten maximalen Performancegröße der ausgewählten Windenergieanlage, wobei die gegebenen Randbedingungen berücksichtigt werden und angenommen wird, dass der Windpark im ungedrosselten Zustand betrieben wird;

c. ein Korrekturmodul ausgebildet zur Ermittlung einer korrigierten maximalen Performancegröße für die ausgewählte Windenergieanlage unter Berücksichtigung der vorherrschenden Performancegröße, der simulierten gedrosselten Performancegröße und der simulierten maximalen Performancegröße; und ein

d. Berechnungsmodul, ausgebildet zur Berechnung der maximal möglichen Abgabeleistung der ausgewählten Windenergieanlage unter Verwendung der korrigierten maximalen Performancegröße ($X_{i,max,est}$).

Das erfindungsgemäße System kann durch Merkmale fortgebildet werden, welche bereits in Zusammenhang mit dem erfindungsgemäßen Verfahren beschrieben wurden.

Gegenstand der Erfindung ist weiterhin ein Windpark umfassend eine Mehrzahl von in räumlicher Nähe zueinander angeordneten Windenergieanlagen zur Umwandlung von Windenergie in elektrische Energie, wobei der Windpark das erfindungsgemäße System aufweist. Der erfindungsgemäße Windpark kann ebenfalls durch weitere Merkmale, welche in Verbindung mit dem erfindungsgemäßen Verfahren beschrieben wurden, fortgebildet werden. Nachfolgend wird eine bevorzugte Ausführungsform der Erfindung unter Bezugnahme auf die beigefügten Zeichnungen beispielhaft erläutert. Es zeigen:

Figur 1:    einen erfindungsgemäßen Windpark mit einem erfindungsgemäßen System zur Ermittlung einer Differenzleistung;

Figur 2:    eine schematische Ansicht des erfindungsgemäßen Systems zur Ermittlung einer Differenzleistung;

Figur 3:    eine schematische Übersicht über die Funktionsweise eines Korrekturmoduls.

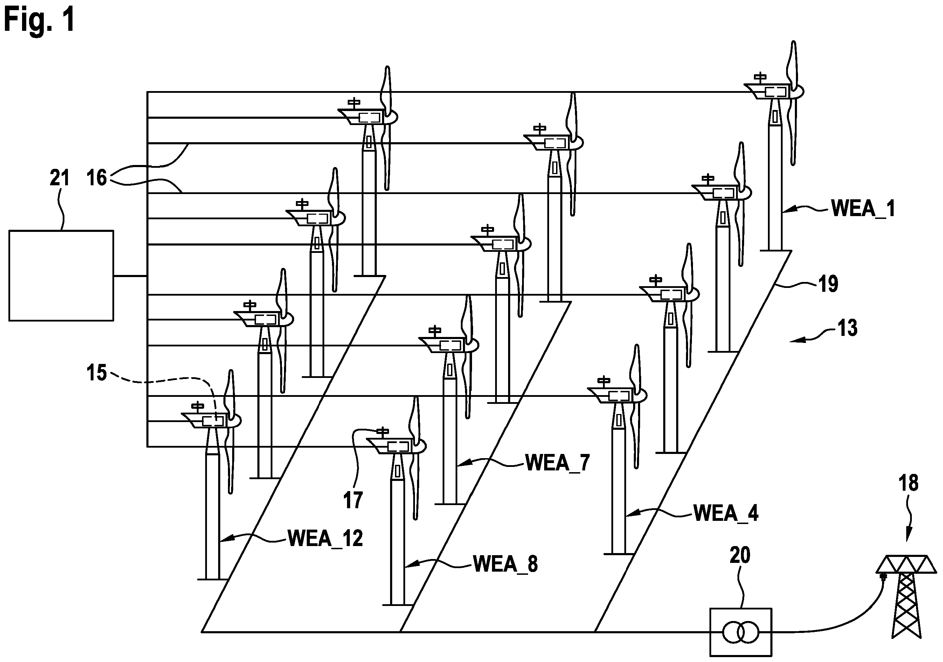

Figur 1 zeigt einen erfindungsgemäßen Windpark 13, welcher ein erfindungsgemäßes System 21 zur Ermittlung einer Differenzleistung $\Delta P$ zwischen einer unter gegebenen Randbedingungen tatsächlich vom Windpark 13 in ein Versorgungsnetz 18 eingespeisten Abgabeleistung und einer unter den Randbedingungen maximal möglichen Abgabeleistung $P_{max}$ aufweist. Der Windpark 13 umfasst zwölf Windenergieanlagen WEA_1 bis WEA_12, welche jeweils einen Rotor zur Umwandlung von Windenergie in Rotationsenergie und einen mit dem Rotor verbundenen Generator zur Umwandlung der Rotationsenergie in elektrische Energie aufweisen. Die Windenergieanlagen werden im Rahmen der Erfindung auch mit WEA_i bezeichnet, wobei der Index i für eine ausgewählte Windenergieanlage steht und die Werte 1 bis 12 annehmen kann. Wenn nachfolgend alle Windenergieanlagen gleichzeitig bezeichnet werden sollen, wird der Einfachheit halber der Index i weggelassen. Die Windenergieanlagen WEA sind über Verbindungsleitungen 19 miteinander verbunden, über die die elektrische Energie an einen Übergabepunkt 20 geleitet wird. Die elektrische Energie wird über den Übergabepunkt 20 pro Zeiteinheit als elektrische Leistung in das Versorgungsnetz 18 eingespeist.

Die Windenergieanlagen WEA weisen jeweils eine Steuereinheit 15 sowie ein damit verbundenes Windmessgerät 17 auf. Die Windmessgeräte 17 sind zur Erfassung einer der jeweiligen Windenergieanlage i zugeordneten gemessenen Windgeschwindigkeit $U_{i,lim,mess}$ ausgebildet. Die Steuereinheiten 15 sind über Signalleitungen 16 mit dem erfindungsgemäßen System 21 verbunden. Das erfindungsgemäße System 21 kann beispielsweise in einer Steuerzentrale des Windparks angeordnet sein. Über die Signalleitungen 16 können die Windenergieanlagen WEA von der zentralen Steuereinheit gesteuert werden.

Vorliegend werden zu einem betrachteten Zeitpunkt alle Windenergieanlagen WEA in einem gedrosselten Zustand betrieben, so dass die Windenergieanlagen WEA weniger Energie aus dem Wind entnehmen, als dies bei optimalem Betrieb der Windenergieanlagen WEA möglich wäre. Dies erfolgt vorliegend dadurch, dass der Blattwinkel der Rotorblätter in einen suboptimalen Bereich verstellt ist. Die momentan vom gedrosselten Windpark 13 in das Versorgungsnetz 18 eingespeiste Leistung $P_{real}$ ergibt sich aus der Summe der von den Windenergieanlagen WEA_i momentan tatsächlich erzeugten vorherrschenden Leistungen $P_{i,lim,real}$, also gemäß $P_{real} = \sum_{i=1}^{12} P_{i,lim,real}$ , wobei der Index i auch hier zur Zuordnung der jeweiligen Leistung zu einer der 12 Windenergieanlagen WEA_i dient.

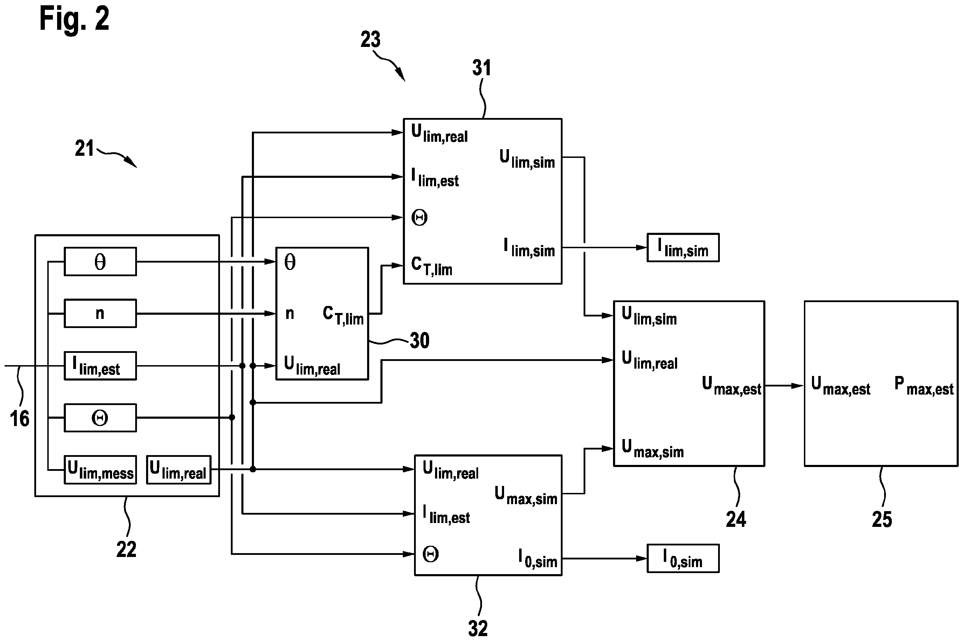

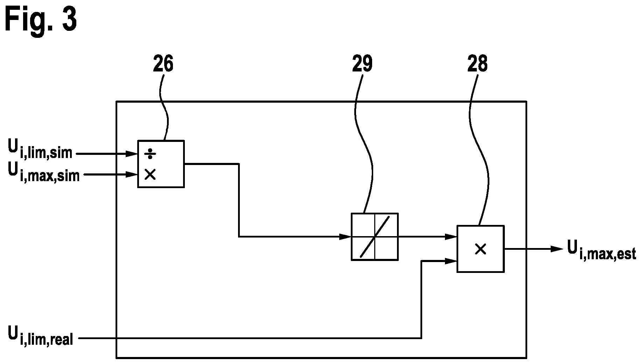

Die Funktionsweise des erfindungsgemäßen Systems sowie des erfindungsgemäßen Verfahrens wird anhand der nachfolgenden Figuren 2 und 3 genauer erläutert.

Figur 2 zeigt das erfindungsgemäße System 21 in einer schematischen Ansicht. Das System 21 umfasst einen Performancedetektor 22, eine Schubbeiwertberechnungseinheit 30, ein Simulationsmodul 23, ein Korrekturmodul 24 sowie ein Berechnungsmodul 25. Über die Signalleitungen 16 werden den Elementen des Systems 21 von den Steuereinheiten 15 der Windenergieanlagen WEA eine Mehrzahl von Betriebsparametern der Windenergieanlagen WEA zugeleitet, insbesondere die Blattwinkel θ und die Drehzahlen n sowie die gemessene Windgeschwindigkeit $U_{lim,mess}$. Zudem wird dem System 21 für jede Windenergieanlage WEA eine Turbulenzintensität I und eine in einem absoluten Koordinatensystem angegebene Windrichtung Θ zugeleitet. Die genannten Parameter sind jeweils einer der Windenergieanlagen WEA_i zugeordnet, wobei in der Figur 2 zur Vereinfachung der Index i weggelassen wurde. Das System kann dazu ausgebildet sein, weitere Eingangsgrößen zu empfangen und in die nachfolgend beschriebenen Simulationen und Berechnungen einzubeziehen, beispielsweise Messwerte von separaten Windmessstationen. Der Performancedetektor 22 ermittelt aus den Betriebsparametern eine vorherrschende Performancegröße $X_{i,lim,real}$, welche in der gezeigten Ausführungsform eine vorherrschende Geschwindigkeit $U_{i,lim,real}$ ist. In alternativen Ausführungsformen (nicht gezeigt) kann die vorherrschende Performancegröße auch durch eine vorherrschende abgegebene Leistung $P_{i,lim,real}$ oder durch ein vorherrschendes Geschwindigkeitsdefizit $\Delta U_{i,lim,real}$ gebildet sein.

Die vorherrschende Geschwindigkeit $U_{i,lim,real}$, kann mit der gemessenen Geschwindigkeit $U_{lim,mess}$ übereinstimmen oder anhand anderer Betriebsparameter der jeweiligen Windenergieanlage berechnet werden. Die vorherrschende Geschwindigkeit $U_{i,lim,real}$ sowie die weiteren Betriebsparameter werden an eine Schubbeiwertberechnungseinheit 30 weitergegeben, welche für jede Windenergieanlage WEA einen vorherrschenden Schubbeiwert $C_{T,lim,real}$ berechnet. Die genannten Betriebsparameter, die vorherrschende Geschwindigkeit sowie der Schubbeiwert werden dann an das Simulationsmodul 23 weitergeleitet.

Das Simulationsmodul 23 ist dazu ausgebildet, ein Nachlaufmodell zu simulieren und im Rahmen des Nachlaufmodells die Windgeschwindigkeit zu berechnen, welche eine ausgewählte Windenergieanlage WEA_i anströmt. Dazu umfasst das Simulationsmodul 23 zwei Untermodule 31, 32. Das Untermodul 31 berücksichtigt bei der Simulation den momentanen gedrosselten Zustand des Windparks und berechnet als simulierte gedrosselte Performancegröße $X_{i,lim,sim}$ eine simulierte gedrosselte Geschwindigkeit $U_{i,lim,sim}$. Das Untermodul 32 nimmt im Gegensatz dazu an, dass der Windpark ungedrosselt betrieben wird. Auf diese Weise ermittelt das Untermodul 32 als simulierte maximale Performancegröße $X_{i,max,sim}$ eine simulierte maximale Geschwindigkeit $U_{i,max,sim}$ der ausgewählten Windenergieanlage WEA_i.

Die vom Simulationsmodul 23 berechneten Werte $U_{i,lim,sim}, U_{i,max,sim}$ sowie der vom Performancedetektor 22 ermittelte Wert $U_{i,lim,real}$ werden an das Korrekturmodul 24 weitergeleitet.

Figur 3 zeigt eine schematische Übersicht über die Funktionsweise des Korrekturmoduls 24. Das Korrekturmodul 24 umfasst drei Eingänge zum Empfang der Werte $U_{i,lim,sim}$, $U_{i,max,sim}$, sowie $U_{i,lim,real}$. Weiterhin umfasst das Korrekturmodul 24 einen Quotientenbildner 26, welcher einen Quotienten aus den Werten $U_{i,lim,sim}$ und $U_{i,max,sim}$ bildet. Der Quotient wird an einen Ratenbegrenzer 29 weitergegeben, welcher unrealistische starke Schwankungen der erhaltenen Werte verhindert. Vom Ratenbegrenzer 29 gelangt der Quotient zu einem Multiplikator 28. Der Multiplikator 28 multipliziert den Quotienten mit der vorherrschenden Geschwindigkeit $U_{i,lim,real}$ und gibt die korrigierte maximale Geschwindigkeit $U_{i,max,est}$ der ausgewählten Windenergieanlage WEA_i gemäß der Formel $U_{i,max,est} = U_{i,max,sim} \times$

$$\left( U_{i,lim,real} \Big/ U_{i,lim,sim} \right)$$ aus.

Die korrigierte maximale Geschwindigkeit $U_{i,max,est}$ der ausgewählten Windenergieanlage WEA_i wird anschließend an das Berechnungsmodul 25 weitergeleitet, welches die korrigierte maximal mögliche Abgabeleistung $P_{i,max,est}$ der ausgewählten Windenergieanlage WEA_i berechnet (vgl. Figur 2).

Das hier für die Windenergieanlage WEA_i beschriebene Verfahren wird vorzugsweise gleichzeitig bzw. in Echtzeit für alle Windenergieanlagen WEA_i (mit i = 1 bis 12) des Windparks durchgeführt, so dass für jede Windenergieanlage WEA_i eine entsprechende korrigierte maximal mögliche Abgabeleistung $P_{i,max,est}$ vorliegt. Das Berechnungsmodul 25 ist außerdem dazu ausgebildet, aus den korrigierten maximal möglichen Abgabeleistungen $P_{i,max,est}$ die korrigierte maximal mögliche Abgabeleistung des Windparks $P_{max} = \sum_{i=1}^{12} P_{i,max,est}$ zu berechnen. Zudem kann das Berechnungsmodul dazu ausgebildet sein, die momentan tatsächlich in das Versorgungsnetz 18 eingespeiste Abgabeleistung des Windparks $P_{real}$ durch Addition der vorherrschenden Abgabeleistungen der Windenergieanlagen WEA_i zu berechnen gemäß der Formel $P_{real} = \sum_{i=1}^{12} P_{i,lim,real}$ und daraus schließlich die Differenzleistung $\Delta P = P_{max} - P_{real}$ zu berechnen.

Wie oben erläutert werden im vorliegenden Ausführungsbeispiel die Performancegrößen $X_{i,lim,real}, X_{i,lim,sim}, X_{i,max,sim}, X_{i,max,est}$ durch die jeweiligen die ausgewählte Windenergieanlage WEA_i anströmenden Windgeschwindigkeiten $U_{i,lim,real}, U_{i,lim,sim}, U_{i,max,sim}, U_{i,max,est}$ gebildet. In anderen Ausführungsbeispielen (nicht gezeigt) können die Performancegrößen auch durch die entsprechenden abgegebenen Leistungen $P_{i,lim,real}, P_{i,lim,sim}, P_{i,max,sim}, P_{i,max,est}$ bzw. durch die entsprechenden Windgeschwindigkeitsdefizite $\Delta U_{i,lim,real}, \Delta U_{i,lim,sim}, \Delta U_{i,max,sim}, \Delta U_{i,max,est}$ der ausgewählten Windenergieanlage WEA_i gebildet sein.

**Patentansprüche**

1. Verfahren zur Ermittlung einer Differenzleistung ($\Delta P$) zwischen einer unter gegebenen Randbedingungen tatsächlich in ein Versorgungsnetz (18) eingespeisten Abgabeleistung ($P_{reaz}$) eines Windparks (13) und einer unter den Randbedingungen maximal möglichen Abgabeleistung ($P_{max}$) des Windparks (13), wobei der Windpark (13) eine Mehrzahl von in räumlicher Nähe zueinander angeordneten Windenergieanlagen (WEA) zur Umwandlung von Windenergie in elektrische Energie aufweist, **gekennzeichnet durch** die nachfolgenden Schritte:

   a. Betreiben des Windparks (13) unter den gegebenen Randbedingungen, wobei zumindest eine der Windenergieanlagen (WEA) in einem gedrosselten Zustand betrieben wird;
   b. Ermitteln einer unter den Randbedingungen vorherrschenden Performancegröße ($X_{i,lim,real}$) einer ausgewählten Windenergieanlage (WEA_i);
   c. Verwenden eines Nachlaufmodells zur Schätzung einer simulierten gedrosselten Performancegröße ($X_{i,lim,sim}$) der ausgewählten Windenergieanlage (WEA_i), wobei im Nachlaufmodell die gegebenen Randbedingungen sowie der gedrosselte Zustand der zumindest einen Windenergieanlage (WEA) berücksichtigt werden;
   d. Verwenden des Nachlaufmodells zur Schätzung einer simulierten maximalen Performancegröße ($X_{i,max,sim}$) der ausgewählten Windenergieanlage (WEA_i), wobei im Nachlaufmodell die gegebenen Randbedingungen berücksichtigt werden und angenommen wird, dass der Windpark (13) im ungedrosselten Zustand betrieben wird;
   e. Ermitteln einer korrigierten maximalen Performancegröße ($X_{i,max,est}$) für die ausgewählte Windenergieanlage (WEA_i) unter Berücksichtigung der vorherrschenden Performancegröße ($X_{i,lim,real}$), der simulierten gedrosselten Performancegröße ($X_{i,lim,sim}$) und der simulierten maximalen Performancegröße ($X_{i,max,sim}$);
   f. Verwenden der korrigierten maximalen Performancegröße ($X_{i,max,est}$) zur Berechnung der maximal möglichen Abgabeleistung ($P_{i,max,est}$) der ausgewählten Windenergieanlage (WEA_i).

2. Verfahren gemäß Anspruch 1, bei dem in Schritt a. alle Windenergieanlagen (WEA) in einem gedrosselten Zustand betrieben werden.

3. Verfahren gemäß Anspruch 1 oder 2, bei dem in Schritt e. zur Ermittlung der korrigierten maximalen Performancegröße ($X_{i,max,est}$) ein Quotient aus der vorherrschenden Performancegröße ($X_{i,lim,real}$) und der simulierten gedrosselten Performancegröße ($X_{i,lim,sim}$) gebildet wird, wobei dieser Quotient mit der simulierten maximalen Performancegröße ($X_{i,max,sim}$) multipliziert wird, so dass sich die korrigierte maximale Performancegröße anhand Formel

$$X_{i,max,est} = X_{i,max,sim} \times \left( X_{i,lim,real} \middle/ X_{i,lim,sim} \right)$$

ergibt.

4. Verfahren gemäß einem der Ansprüche 1 bis 3, bei dem die Schritte b. bis f. für eine Mehrzahl von Windenergieanlagen (WEA_i) und bevorzugt für alle Windenergieanlagen (WEA_i) des Windparks (13) durchgeführt werden, wobei in Schritt f. die Mehrzahl der bzw. alle maximalen Abgabeleistungen ($P_{i,max,est}$) der Windenergieanlagen (WEA_i) zur Ermittlung der maximal möglichen Abgabeleistung des Windparks ($P_{max}$) addiert werden.

5. Verfahren gemäß einem der Ansprüche 1 bis 4, bei dem die Performancegrößen ($X_{i,lim,real}, X_{i,lim,sim}, X_{i,max,sim}, X_{i,max,est}$) durch die jeweiligen die ausgewählte Windenergieanlage (WEA_i) anströmenden Windgeschwindigkeiten ($U_{i,lim,real}, U_{i,lim,sim}, U_{i,max,sim}, U_{i,max,est}$) gebildet sind.

6. Verfahren gemäß einem der Ansprüche 1 bis 4, bei dem die Performancegrößen ($X_{i,lim,real}, X_{i,lim,sim}, X_{i,max,sim}, X_{i,max,est}$) durch die jeweilige von der ausgewählten Windenergieanlage (WEA_i) abgegebene Leistung ($P_{i,lim,real}, P_{i,lim,sim}, P_{i,max,sim}, P_{i,max,est}$) gebildet ist.

7. Verfahren gemäß einem der Ansprüche 1 bis 4, bei die Performancegrößen ($X_{i,lim,real}, X_{i,lim,sim}, X_{i,max,sim}, X_{i,max,est}$) durch das jeweilige Windgeschwindigkeitsdefizit ($\Delta U_{i,lim,real}, \Delta U_{i,lim,sim}, \Delta U_{i,max,sim}, \Delta U_{i,max,est}$) der ausgewählten Windenergieanlage (WEA_i) gebildet ist, wobei das Windgeschwindigkeitsdefizit die Differenz zwischen der Geschwindigkeit der den Windpark (13) frei anströmenden Luft und der auf die ausgewählte Windenergieanlage (WEA_i) auftreffenden Luft ist.

8. System zur Ermittlung einer Differenzleistung ($\Delta P$) zwischen einer unter gegebenen Randbedingungen tatsächlich in ein Versorgungsnetz eingespeisten Abgabeleistung ($P_{reazi}$) eines gedrosselt betriebenen Windparks (13) und einer unter den Randbedingungen maximal möglichen Abgabeleistung ($P_{max}$) des Windparks (13), umfassend:

> a. einen Performancedetektor (22) zur Ermittlung einer unter den Randbedingungen tatsächlich vorherrschenden Performancegröße ($X_{i,lim,real}$) einer ausgewählten Windenergieanlage (WEA_i);
> b. ein Simulationsmodul (23) ausgebildet zur Simulation eines Nachlaufmodells zur Berechnung einer
>
> > i. simulierten gedrosselten Performancegröße ($X_{i,lim,sim}$) der ausgewählten Windenergieanlage (WEA_i), wobei die gegebenen Randbedingungen sowie der gedrosselte Zustand der zumindest einen Windenergieanlage (WEA) berücksichtigt werden, sowie einer
> > ii. simulierten maximalen Performancegröße ($X_{i,max,sim}$) der ausgewählten Windenergieanlage (WEA_i), wobei die gegebenen Randbedingungen berücksichtigt werden und angenommen wird, dass der Windpark (13) im ungedrosselten Zustand betrieben wird;
>
> c. ein Korrekturmodul (24) ausgebildet zur Ermittlung einer korrigierten maximalen Performancegröße ($X_{i,max,est}$) für die ausgewählte Windenergieanlage (WEA_i) unter Berücksichtigung der vorherrschenden Performancegröße ($X_{i,lim,real}$), der simulierten gedrosselten Performancegröße ($X_{i,lim,sim}$) und der simulierten maximalen Performancegröße ($X_{i,max,sim}$); und ein
> d. Berechnungsmodul (25), ausgebildet zur Berechnung der maximal möglichen Abgabeleistung ($P_{i,max,est}$) der ausgewählten Windenergieanlage (WEA_i) unter Verwendung der korrigierten maximalen Performancegröße ($X_{i,max,est}$).

9. Windpark (13) umfassend eine Mehrzahl von in räumlicher Nähe zueinander angeordneten Windenergieanlagen (WEA_i) zur Umwandlung von Windenergie in elektrische Energie, **gekennzeichnet durch** ein System gemäß Anspruch 8.

**Claims**

1. Method for determining a differential power ($\Delta P$) between an output power ($P_{real}$) of a wind farm (13) that is actually fed into a supply grid (18) under given boundary conditions and a maximum possible output power ($P_{max}$) of the wind farm (13) under the boundary conditions, wherein the wind farm (13) has a plurality of wind turbines (WEA), arranged in spatial proximity to each other, for converting wind energy into electrical energy, **characterized by** the following steps of:

> a. operating the wind farm (13) under the given boundary conditions, wherein at least one of the wind turbines (WEA) is operated in a restricted state;
> b. determining a performance variable ($X_{i,lim,real}$), prevailing under the boundary conditions, of a selected wind turbine (WEA_i) ;
> c. using a wake model to estimate a simulated restricted performance variable ($Xi_{lim,sim}$) of the selected wind turbine (WEA_i), wherein the wake model takes into account the given boundary conditions and the restricted state of the at least one wind turbine (WEA);
> d. using the wake model to estimate a simulated maximum performance variable ($X_{i,max,sim}$) of the selected wind turbine (WEA_i), wherein the wake model takes into account the given boundary conditions and it is assumed that the wind farm (13) is operated in the unrestricted state;
> e. determining a corrected maximum performance variable ($X_{i,max,est}$) for the selected wind turbine (WEA_i) while taking into account the prevailing performance variable ($X_{i,lim,real}$)' the simulated restricted performance variable ($X_{i,lim,sim}$) and the simulated maximum performance variable ($X_{i,max,sim}$) ;
> f. using the corrected maximum performance variable ($X_{i,max,est}$) to calculate the maximum possible output power ($P_{i,max,est}$) of the selected wind turbine (WEA_i).

2. Method according to Claim 1, in which, in step a., all of the wind turbines (WEA) are operated in a restricted state.

3. Method according to Claim 1 or 2, in which, in step e., the corrected maximum performance variable ($X_{i,max,est}$) is determined by forming a quotient from the prevailing performance variable ($X_{i,lim,real}$) and the simulated restricted performance variable ($X_{i,lim,sim}$), wherein this quotient is multiplied by the simulated maximum performance variable ($X_{i,max,Sim}$) to give the corrected maximum performance variable using the formula

$$X_{i,max,est} = X_{i,max,sim} \times \left(\frac{X_{i,lim,real}}{X_{i,lim,sim}}\right).$$

**4.** Method according to one of Claims 1 to 3, in which the steps b. to f. are carried out for a plurality of wind turbines (WEA_i) and preferably for all of the wind turbines (WEA_ i) of the wind farm (13), wherein, in step f., the plurality of or all of the maximum output powers ($P_{i,max,est}$) of the wind turbines (WEA_i) are added together to determine the maximum possible output power of the wind farm ($P_{max}$).

**5.** Method according to one of Claims 1 to 4, in which the performance variables ($X_{i,lim,real}$, $X_{i,lim,sim}$, $X_{i,max,sim}$, $X_{i,max,est}$) are formed by the respective wind speeds ($U_{i,lim,real}$, $U_{i,lim,sim}$, $U_{i,max,sim}$, $U_{i,max,est}$) incident on the selected wind turbine (WEA_i).

**6.** Method according to one of Claims 1 to 4, in which the performance variables ($X_{i,lim,real}$, $X_{i,lim,sim}$, $X_{i,max,sim}$, $X_{i,max,est}$) are formed by the respective power ($P_{i,lim,real}$, $P_{i,lim,sim}$, $P_{i,max,sim}$, $P_{i,max,est}$) that is output by the selected wind turbine (WEA_i).

**7.** Method according to one of Claims 1 to 4, in which the performance variables ($X_{i,lim,real}$, $X_{i,lim,sim}$, $X_{i,max,sim}$, $X_{i,max,est}$) are formed by the respective wind speed deficit ($\Delta U_{i,lim,real}$, $\Delta U_{i,lim,sim}$, $\Delta U_{i,max,sim}$, $\Delta U_{i,max,est}$) of the selected wind turbine (WEA_i), wherein the wind speed deficit is the difference between the speed of the air freely incident on the wind farm (13) and the air striking the selected wind turbine (WEA_i).

**8.** System for determining a differential power ($\Delta P$) between an output power ($P_{real}$) of a wind farm (13) operated in a restricted state that is actually fed into a supply grid under given boundary conditions and a maximum possible output power ($P_{max}$) of the wind farm (13) under the boundary conditions, comprising:

a. a performance detector (22) for determining a performance variable ($X_{i,lim,real}$), actually prevailing under the boundary conditions, of a selected wind turbine (WEA_i);
b. a simulation module (23) designed to simulate a wake model for calculating a

i. simulated restricted performance variable ($X_{i,lim,sim}$) of the selected wind turbine (WEA_i), wherein the given boundary conditions and the restricted state of the at least one wind turbine (WEA) are taken into account, and a
ii. simulated maximum performance variable ($X_{i,max,sim}$) of the selected wind turbine (WEA_i), wherein the given boundary conditions are taken into account and it is assumed that the wind farm (13) is operated in the unrestricted state;

c. a correction module (24) designed to determine a corrected maximum performance variable ($X_{i,max,est}$) for the selected wind turbine (WEA_i) while taking into account the prevailing performance variable ($X_{i,lim,real}$), the simulated restricted performance variable ($X_{i,lim,sim}$) and the simulated maximum performance variable ($X_{i,max,sim}$); and a
d. calculation module (25), designed to calculate the maximum possible output power ($P_{i,max,est}$) of the selected wind turbine (WEA_i) using the corrected maximum performance variable ($X_{i,max,est}$).

**9.** Wind farm (13) comprising a plurality of wind turbines (WEA_i), arranged in spatial proximity to each other, for converting wind energy into electrical energy, **characterized by** a system according to Claim 8.

## Revendications

**1.** Procédé de détermination d'une puissance différentielle ($\Delta P$) entre une puissance de sortie ($P_{real}$) d'un parc éolien (13) effectivement injectée dans un réseau d'alimentation (18) et une puissance de sortie maximale ($P_{max}$) possible dans les conditions limites du parc éolien (13), dans lequel le parc éolien (13) comporte une pluralité d'installations d'énergie éolienne (WEA) disposées à proximité spatiale les unes des autres pour la conversion d'énergie éolienne en énergie électrique, **caractérisé par** les étapes consistant à :

a. exploiter le parc éolien (13) dans les conditions limites données, dans lequel au moins l'une des installations d'énergie éolienne (WEA) est exploitée dans un état bridé ;

b. déterminer une grandeur de performance ($X_{i,lim,real}$) d'une installation d'énergie éolienne sélectionnée (WEA_i) qui prédomine dans les conditions limites ;

c. utiliser un modèle de suivi pour estimer une grandeur de performance bridée simulée ($X_{i,lim,sim}$) de l'installation d'énergie éolienne sélectionnée (WEA_i), dans lequel, dans le modèle de suivi, les conditions limites données ainsi que l'état bridé de ladite au moins une installation d'énergie éolienne (WEA) sont pris en compte ;

d. utiliser le modèle de suivi pour estimer une grandeur de performance maximale simulée ($X_{i,max,sim}$) de l'installation d'énergie éolienne sélectionnée (WEA_i), dans lequel, dans le modèle de suivi, les conditions limites données sont prises en compte et il est supposé que le parc éolien (13) soit exploité à l'état non bridé ;

e. déterminer une grandeur de performance maximale corrigée ($X_{i,max,est}$) pour l'installation d'énergie éolienne sélectionnée (WEA_i) en tenant compte de la grandeur de performance réelle ($X_{i,lim,real}$), de la grandeur de performance bridée simulée ($X_{i,lim,sim}$) et de la grandeur de performance maximale simulée ($X_{i,max,sim}$) ;

f. utiliser la grandeur de performance maximale corrigée ($X_{i,max,est}$) pour calculer la puissance de sortie maximale possible ($P_{i,max,est}$) de l'installation d'énergie éolienne sélectionnée (WEA_i).

2. Procédé selon la revendication 1, dans lequel, à l'étape a., toutes les installations d'énergie éolienne (WEA) sont exploitées dans un état bridé.

3. Procédé selon la revendication 1 ou 2, dans lequel, à l'étapes e., pour déterminer la grandeur de performance maximale corrigée ($X_{i,max,est}$), un quotient de la grandeur de performance réelle ($X_{i,lim,real}$) à la grandeur de performance bridée simulée ($X_{i,lim,sim}$) est établi, ce quotient étant multiplié par la grandeur de performance maximale simulée ($X_{i,max,sim}$), de sorte que la grandeur de performance maximale corrigée est obtenue à partir de la formule suivante

$$X_{i,max,est} = X_{i,max,sim} \times \left( \frac{X_{i,lim,real}}{X_{i,lim,sim}} \right).$$

4. Procédé selon l'une des revendications 1 à 3, dans lequel les étapes b. à f. sont effectuées pour une pluralité d'installations d'énergie éolienne (WEA_i) et de préférence pour la totalité des installations d'énergie éolienne (WEA_i) du parc éolien (13), dans lequel, à l'étape f., la pluralité ou la totalité des puissances de sortie maximales ($P_{i,max,est}$) des installations d'énergie éolienne (WEA_i) sont additionnées pour déterminer la puissance de sortie maximale possible ($P_{max}$) du parc éolien.

5. Procédé selon l'une des revendications 1 à 4, dans lequel les grandeurs de performance ($X_{i,lim,real}$, $X_{i,lim,sim}$, $X_{i,max,sim}$, $X_{i,max,est}$) sont établies par l'intermédiaire des vitesses de vent respectives ($U_{i,lim,real}$, $U_{i,lim,sim}$, $U_{i,max,sim}$, $U_{i,max,est}$) arrivant sur l'installation d'énergie éolienne sélectionnée (WEA_i).

6. Procédé selon l'une des revendications 1 à 4, dans lequel les grandeurs de performance ($X_{i,lim,real}$, $X_{i,lim,sim}$, $X_{i,max,sim}$, $X_{i,max,est}$) sont établies par l'intermédiaire de la puissance respective ($P_{i,lim,real}$, $P_{i,lim,sim}$, $P_{i,max,sim}$, $P_{i,max,est}$) délivrée par l'installation d'énergie éolienne sélectionnée (WEA_i).

7. Procédé selon l'une des revendications 1 à 4, dans lequel les grandeurs de performance ($X_{i,lim,real}$, $X_{i,lim,sim}$, $X_{i,max,sim}$, $X_{i,max,est}$) sont établies par l'intermédiaire du déficit de vitesse de vent respectif ($\Delta U_{i,lim,real}$, $\Delta U_{i,lim,sim}$, $\Delta U_{i,max,sim}$, $\Delta U_{i,max,est}$) de l'installation d'énergie éolienne sélectionnée (WEA_i), le déficit de vitesse de vent étant la différence entre la vitesse de l'air arrivant librement sur le parc éolien (13) et celle de l'air arrivant sur l'installation d'énergie éolienne sélectionnée (WEA_i).

8. Système de détermination d'une puissance différentielle ($\Delta P$) entre une puissance de sortie ($P_{real}$), effectivement injectée dans un réseau d'alimentation dans des conditions limites données, d'un parc éolien (13) exploité de manière bridée et une puissance de sortie maximale possible ($P_{max}$) du parc éolien (13) dans les conditions limites, comprenant :

a. un détecteur de performance (22) permettant de déterminer une grandeur de performance ($X_{i,lim,real}$) d'une installation d'énergie éolienne sélectionnée (WEA_i) qui prédomine effectivement dans les conditions limites ;

b. un module de simulation (23) conçu pour simuler un modèle de suivi afin de calculer

i. une grandeur de performance bridée simulée ($X_{i,lim,sim}$) de l'installation d'énergie éolienne sélectionnée (WEA_i), dans lequel les conditions limites données ainsi que l'état bridé de ladite au moins une installation d'énergie éolienne (WEA) sont pris en compte, et

ii. une grandeur de performance maximale simulée ($X_{i,max,sim}$) de l'installation d'énergie éolienne sélectionnée (WEA_i), dans lequel les conditions limites données sont prises en compte et il est supposé que le parc éolien (13) est exploité à l'état non bridé ;

c. un module de correction (24) conçu pour déterminer une grandeur de performance maximale corrigée ($X_{i,max,est}$) pour l'installation d'énergie éolienne sélectionnée (WEA_i) en tenant compte de la grandeur de performance réelle ($X_{i,lim,real}$), de la grandeur de performance bridée simulée ($X_{i,lim,sim}$) et de la grandeur de performance maximale simulée ($X_{i,max,sim}$) ; et

d. un module de calcul (25), conçu pour calculer la puissance de sortie maximale possible ($P_{i,max,est}$) de l'installation d'énergie éolienne sélectionnée (WEA_i) en utilisant la grandeur de performance maximale corrigée ($X_{i,max,est}$).

9. Parc éolien (13) comprenant une pluralité d'installations d'énergie éolienne (WEA_i) disposées à proximité spatiale les unes des autres pour la conversion d'énergie éolienne en énergie électrique, **caractérisé par** un système selon la revendication 8.

**Fig. 1**

21  16

WEA_1

19

13

15

WEA_7

17

WEA_4

WEA_12

18

WEA_8

20

EP 3 587 805 B1

Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018162706 A1

**In der Beschreibung aufgeführte Nicht-Patentliteratur**

- **GÖGMEN, T. ; GIEBEL, G. ; SØRENSEN, P. E. ; POULSEN, N. K.** Possible Power Estimation of Down-Regulated Offshore Wind Power Plants. Technical University of Denmark (DTU), 2016